# EUROPEAN PATENT SPECIFICATION

(11) **EP 2 508 408 B1**
(45) Date of publication and mention of the grant of the patent: **01.07.2015**
(21) Application number: 12162873.9
(22) Date of filing: 02.04.2012
(51) Int. Cl.: B62B 3/02, B62B 3/16

(54) **Rolling container and method for transporting same**
Rollbehälter und Verfahren zu seinem Transport
Récipient roulant et procédé de transport associé

(30) Priority: 04.04.2011 NL 2006529; 03.08.2011 NL 2007219
(43) Date of publication of application: 10.10.2012
(73) Proprietor: Hoza Holding B.V., 9679 TC Scheemda (NL)
(72) Inventor: Bouma, Harm, NL-9636 CK Zuidbroek (NL)
(74) Representative: Verdijck, Gerardus

(56) References cited:
- DE-U1- 9 406 270
- FR-A1- 2 036 758
- FR-A1- 2 713 577
- US-A- 2 332 999
- US-A1- 2006 097 487
- US-B1- 6 443 481

## Description

The present invention relates to a rolling container for transporting goods.

US 2006/097487A1, FR 2 036 758 A1 and US 2 332 999 A disclose rolling containers comprising a foldable carrier part and roller elements arranged thereon.

Diverse types of rolling container are known in practice for transporting goods. Goods are here placed on a supporting and movable part. A wire mesh is usually provided on a part of the sides. After transport of the goods the return transport is usually with the rolling containers empty. This means that return transport must involve a relatively large volume. Collapsible rolling containers are therefore also known in practice. The rolling container consists here of a frame with a base which can be folded upward. After the base has been folded up, the side walls are moved against each other. A problem here is that this results in unstable collapsed constructions which are difficult to handle.

The present invention has for its object to obviate or at least reduce the above stated problems with rolling containers and collapsible rolling containers.

The present invention provides for this purpose a rolling container, according to claim 1.

In the situation of use, i.e. in a folded-out state of the rolling container according to the invention, the foldable carrier part lies in a substantially horizontal plane. Goods can be placed on this substantially horizontal support surface. A so-called rolling container is obtained by providing the carrier part with roller elements, for instance wheels. A middle segment is obtained by providing the foldable carrier part with a central bridge part, wherein the bridge part extends over the whole width of the rolling container, i.e. substantially at right angles to the usual direction of travel. Situated on the sides of this middle segment or bridge part are the side parts which are connected to the central bridge part using connecting parts. The bridge part, the two connecting parts and the two side parts together form the support surface for the goods for transport.

According to the invention the connecting part is pivotally connected to the bridge part and to the side part. Owing to this specific configuration the central bridge part will move during folding in a direction substantially at right angles to the plane of the carrier part in a situation of use. This means that the central bridge part moves in a substantially vertical direction during folding. This achieves that during the folding movement the side parts of the carrier part are moved relatively toward each other. A controlled and stable folding movement is hereby realized which is stable in both a situation of use and in a folded-in transport state, and it continues to be an independent unit. This is partly caused by the fact that all components remain in contact with each other as a result of the pivotable connections.

An additional advantage is that a safe use of the rolling container according to the invention is also achieved due to the controlled movement. The rolling container is not pressed askew either, so the rolling container is not damaged during the frequent folding in and out.

A further additional advantage of the rolling container according to the invention is that it can be folded in and folded out in uniform manner. This is realized by the substantially vertical movement of the central bridge part and the substantially horizontal movement of the side parts in opposite direction. This provides options, for instance for automatic operation of the transport of goods, wherein rolling containers are folded in and/or folded out automatically.

The carrier parts are preferably manufactured from a lightweight plastic such as polyethylene, polypropylene and/or other components, or combinations thereof.

The folding movement in which the side parts move toward each other preferably takes place in the usual direction of travel of the rolling container according to the invention. This is possible through the choice of mounting for the rolling elements, which are mounted in rotating/pivoting manner and/or in a fixed direction of travel.

The dimensions of the bridge part, the side part and connecting part are preferably such that a folded-in rolling container requires at most half the floor surface area of a folded-out rolling container, and more specifically preferably such that two folded-in rolling containers according to the invention can be positioned in one rolling container according to the invention in a situation of use. A 200% reduction in the floor surface area can in this way be realized during empty return transport of the rolling containers.

According to the present invention the connecting part comprises an intermediate part and a coupling part, each pivotally connected to the central bridge part and one of the side parts.

Providing an intermediate part, on which goods can be placed, and a coupling part further increases the stability of the rolling container.

The intermediate part and the coupling part are connected with separate pivot shafts to the central bridge part and one of the side parts. This means that each intermediate part and each coupling part is connected with a separate pivot shaft to the bridge part and a side part. In this advantageous embodiment each side part is therefore provided with two pivot shafts and the central bridge part with a total of four separate pivot shafts. These pivot shafts are preferably formed from tubes. Providing the separate pivot shafts enables still further control of the stability of the whole folding movement for moving the rolling container between a situation of use and an empty, folded-in transport state.

According to the present invention the pivot shafts of one connecting part are positioned such that a parallelogram construction is realized.

The parallelogram form of the pivot shafts associated with one connecting part, comprising an intermediate part and a coupling part, is realized by choosing the positioning of the pivot shafts in this way. A rigid and stable construction is hereby realized which has a further increased stability. In this way each rolling container consists of such a parallelogram construction on either side of the central bridge part.

A particular advantage of applying such a parallelogram construction is that it is hereby possible for one user to fold up a rolling container in controlled manner without the danger of the rolling container being pressed askew during the folding movement.

A further additional advantage is that the rolling container also remains stable in a folded-in state such that it can be displaced by one user using the rolling elements, and does not for instance have to be lifted or carried. This further enhances the user-friendliness of the rolling container according to the invention. A further additional advantage is that the working conditions for a user of the rolling container are hereby further improved in that pushing and lifting movements are limited, since the rolling container can be easily displaced in rollable manner in both the situation of use and in the folded transport state.

In a further advantageous preferred embodiment of the present invention the parallelograms on either side of the central bridge part are moved through a dead centre in a situation of use.

Moving the parallelograms to some extent through a dead centre in a situation of use, i.e. the parallelograms, as seen from the side elements, are provided at a small negative angle relative to horizontal, prevents undesired inward folding. Inward folding is therefore only possible when the central bridge part is lifted back upward to some extent through the dead centre, after which the folding movement can be completed in controlled manner. This configuration therefore brings about a kind of lock system. Additionally or alternatively, the parallelograms can already be caused to move to some extent through the dead centre by the weight of the carrier part itself as well as by the load on the support surface.

In a further advantageous preferred embodiment according to the present invention the coupling part is provided with contact elements which engage on corresponding contact elements of the coupling part located on the other side of the central bridge part.

Connecting the two coupling parts on either side of the central bridge part such that the contact elements maintain mutual contact, in any case during the folding movement, further increases the control of this folding movement. A stable and balanced displacement of the side parts is hereby brought about during the folding movement. An additional resistance to the movement can optionally be provided so that in any intermediate position during the folding movement the rolling container can remain in place in stable manner and is optionally displaceable.

These contact elements are preferably embodied as mutually engaging toothings on the coupling parts. The number of teeth is preferably adapted to the dimensions of the rolling container and the desired degree of controllability of the folding movement.

In a further advantageous preferred embodiment according to the present invention the connecting parts are provided symmetrically such that the connecting parts on either side of the central bridge part are interchangeable.

The use of the symmetrically formed connecting parts achieves that these connecting parts are interchangeable and that any connecting part can be placed on either side of the central bridge part. This has a clear advantage from a production engineering viewpoint. Limiting the number of parts also greatly simplifies maintenance and assembly. This is preferably the case for both the intermediate part and the coupling part. The side parts preferably also take a symmetrical form such that these parts are also mutually interchangeable. This means for instance that only a part of the rolling container need be replaced in the case of damage. This enables inter alia the reuse of roller containers or parts thereof. In this way a rolling container according to the invention can consist of a standard side part, standard connecting part formed by a standard intermediate part and coupling part, and a standard central bridge part.

The roller elements, for instance in the form of wheels, are preferably provided on the side parts of the carrier part. Contact can in this way be maintained in simple manner between the rolling container and the ground during the folding movement.

The side part is preferably provided with coupling means for coupling of a side wall. A rolling container according to the invention can in this way be provided with preferably two side walls placed on the side parts. The side walls are preferably provided substantially parallel to the longitudinal direction of the central bridge part. A so-called potato-vegetable-fruit (PVF) embodiment of the rolling container is hereby obtained. It is optionally possible to as it were suspend a rear wall and/or front wall between the two side walls or provide them rotatably on one of these side walls. This makes it possible to realize a closed rolling container.

In a further advantageous preferred embodiment according to the present invention the rolling container is provided with a rear wall.

Providing a rear wall increases the possible applications for the rolling container according to the invention. A rolling container provided with rear wall can for instance displace a larger quantity of products.

The rear wall is preferably provided with hinge means for folding the rear wall inward in coordinated manner with the foldable carrier part. An effective rolling container is obtained by allowing the rear wall to also pivot in a manner such that it corresponds to the floor part. The rear wall preferably pivots in a substantially horizontal plane and the carrier part substantially in the vertical plane. A front wall is optionally also provided. It hereby becomes possible, together with the side walls, to provide a wall on all sides of the rolling container for full support of goods.

The present invention further relates to a method for transporting rolling containers according to claim 9.

Such a method provides the same effects and advantages as described for the rolling container.

Further advantages, features and details of the invention are elucidated on the basis of the preferred embodiments thereof, wherein reference is made to the accompanying drawings, in which:
- figure 1 shows a view of the rolling container according to the invention;
- figure 2 shows a stacked configuration of the rolling container of figure 1;
- figure 3 shows a view of the support surface during the folding movement;
- figures 4A and B show a view of a parallelogram configuration during the situation of use and the folding movement;
- figures 5A and B show a view of an alternative embodiment of the rolling container according to the invention; and
- figure 6 shows a view of a rear wall for the rolling container according to the invention.

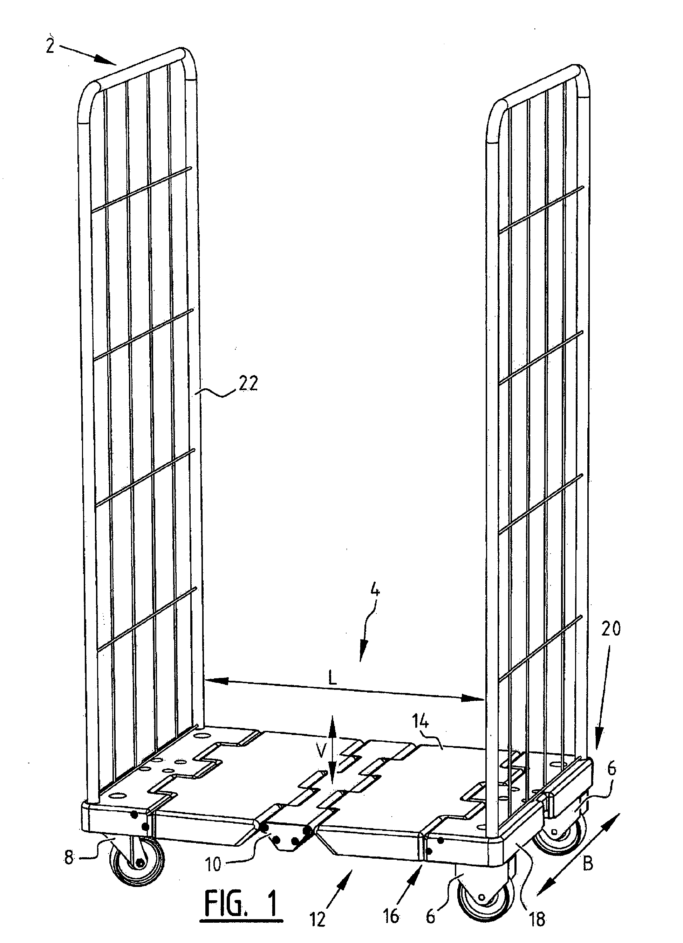

A rolling container 2 (figure 1) comprises a support platform or support surface 4 on which two wheels 6 with fixed direction of travel and two swivel wheels 8 are provided in the shown embodiment. Support surface 4 is provided with a bridge part or middle beam 10 and connecting part 12. Connecting part 12 is formed by intermediate part 14 and coupling part or coupling beam 16. Connecting part 12 is connected to side part 18. Wheels 6, 8 are placed on side part 18. In the shown embodiment side parts 18 are also provided with recesses 20 into which side panels 22 can be placed.

In the shown embodiment rolling container 2 has a length L, a width B, and during the folding movement central bridge part 10 is moved in a direction V, wherein direction V is substantially perpendicular to a substantially horizontal plane defined by length L and width B. In the shown embodiment the main direction of travel of container 2 is in direction L.

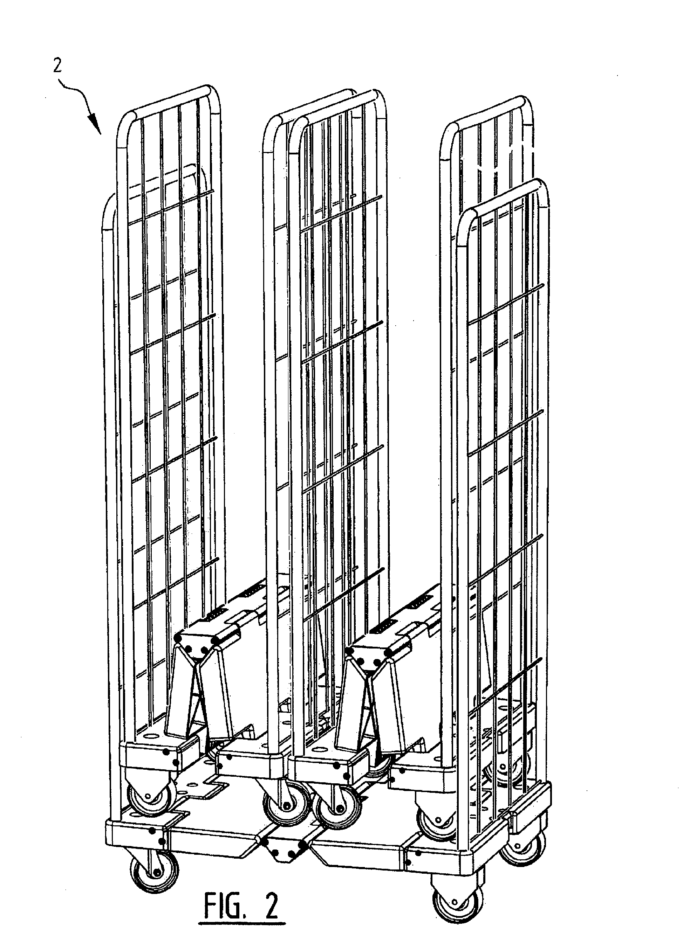

In a situation of use of rolling container 2 (figure 2) two rolling containers 2 can be placed in folded state in rolling container 2. In the case of empty return transport three rolling containers 2 can in this way be transported on the surface area of only one rolling container 2.

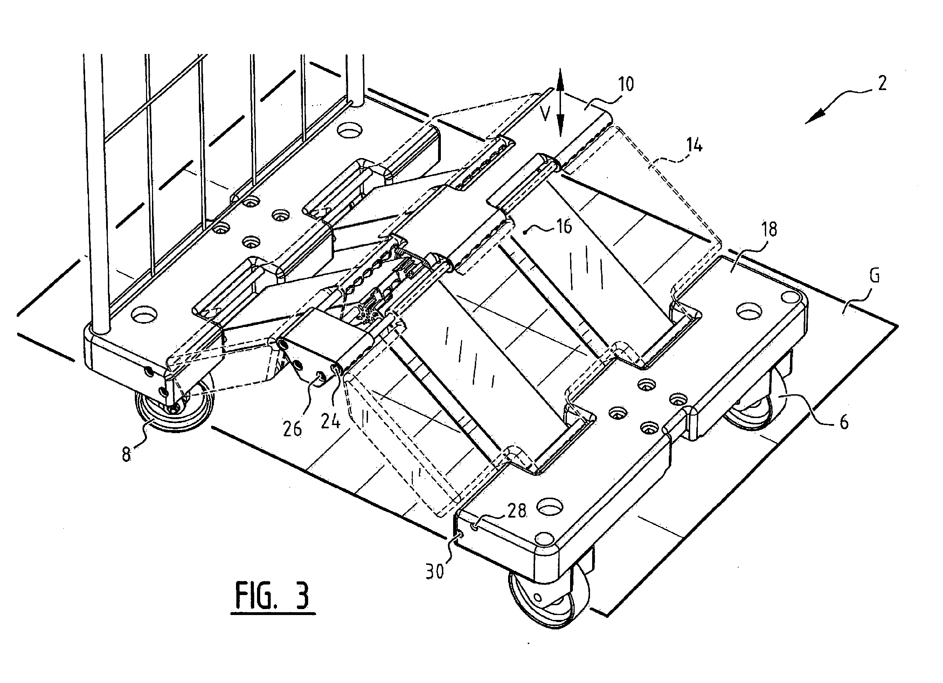

During the folding movement of rolling container 2 (figure 3) the central bridge part 10 is moved in a direction V. Intermediate part 14 and coupling part 16 pivot here about respective shafts 24, 26 relative to central bridge part 10 and about perspective shafts 28, 30 relative to side part 18. During the folding movement wheels 6, 8 remain in contact with ground surface G. Pivot shafts 24, 26, 28, 30 are embodied in the shown embodiment as tubular elements.

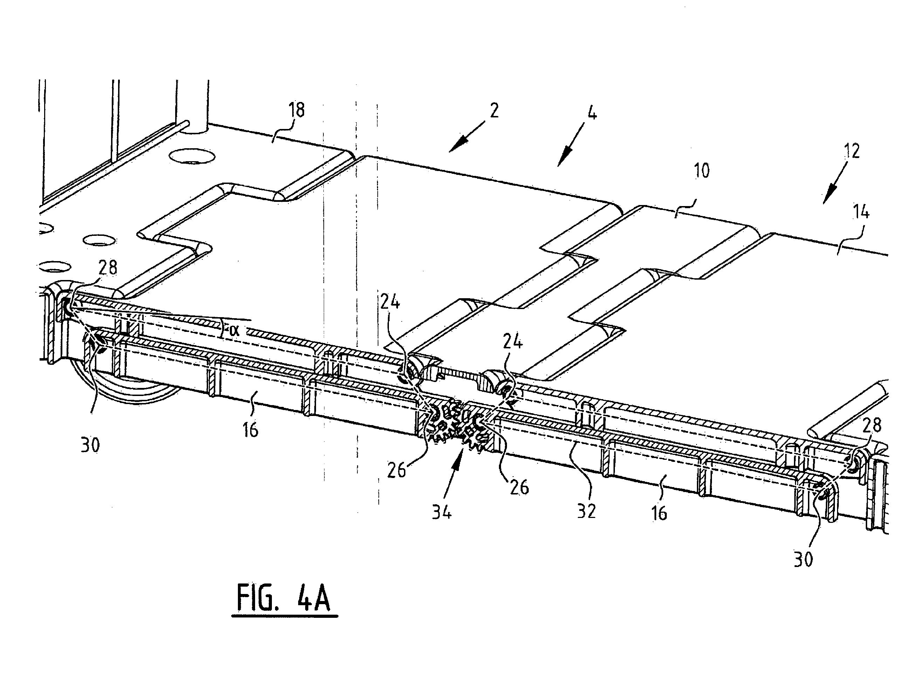

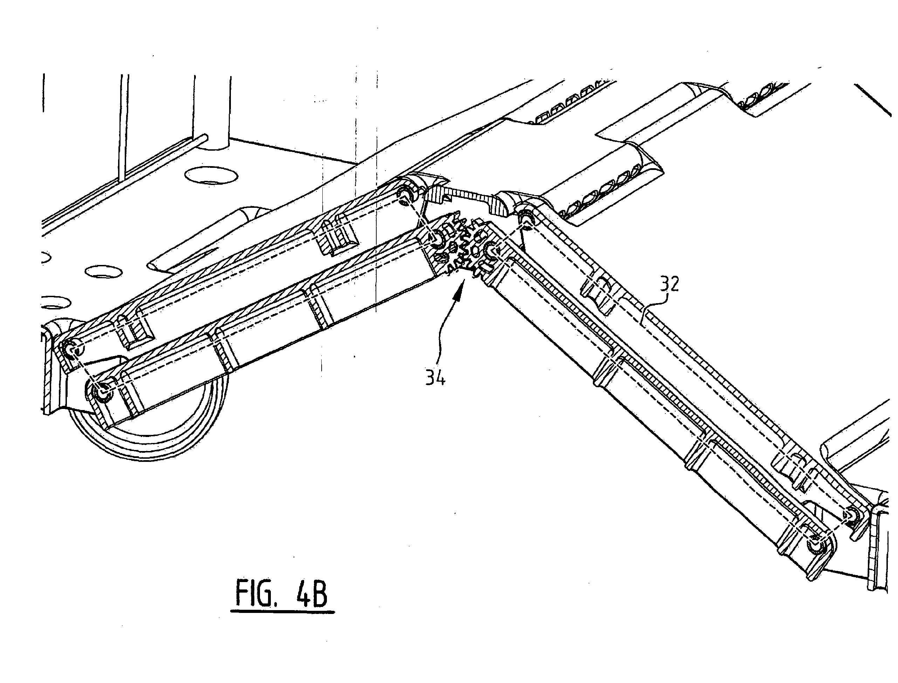

Tubes 24, 26, 28, 30 (figures 4A and 4B) form a parallelogram 32, both in the situation of use (figure 4A) and during the folding movement (figure 4B). In the shown embodiment coupling parts 16 are provided at the outer ends close to central bridge part 10 with toothed wheels 34 such that toothed wheels 34 of two coupling parts 16 on either side of central part 10 mutually engage. The contact between toothed wheels 34 is maintained in the situation of use, as well as during the whole folding movement into the collapsed state. In the shown embodiment a small, negative angle α is provided in the situation of use between the plane of intermediate part 14 in the situation of use and an imaginary, substantially horizontal plane defined by length L and width B of rolling container 2. In the situation of use of rolling container 2 parallelogram 32 is hereby pressed to some extent through the dead centre, wherein the point of equilibrium or dead centre is defined in the shown embodiment by the position in which the main sides of parallelograms 32 lie in the same plane as the imaginary plane formed by length L and width B. Angle α is preferably small, and is preferably no greater than at most about 5°, and in the shown embodiment about 2°.

In the shown embodiment of rolling container 2, rolling container 2 can be placed in a folded transport state by lifting central bridge part 10 slightly, for instance with a foot of a user, or in automatic manner during automatic transport of rolling containers 2. Parallelogram 32 is hereby also raised slightly through the dead centre. The folding movement can then be further completed by moving the two side parts 18 toward each other. A uniform relative movement of the two side parts takes place as a result of toothed wheels 34. It is possible here to hold one side in place and to move the other. Central bridge part 10 will in this way move in a direction V and also in a direction L due to fixation of one of the two side parts 18. When rolling container 2 is folded open the folding movement is performed in opposite direction.

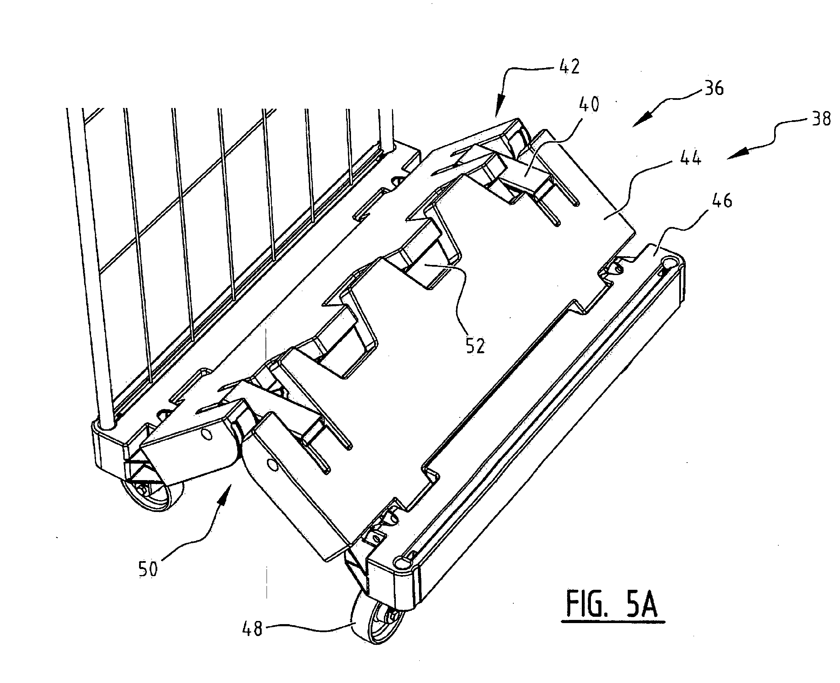

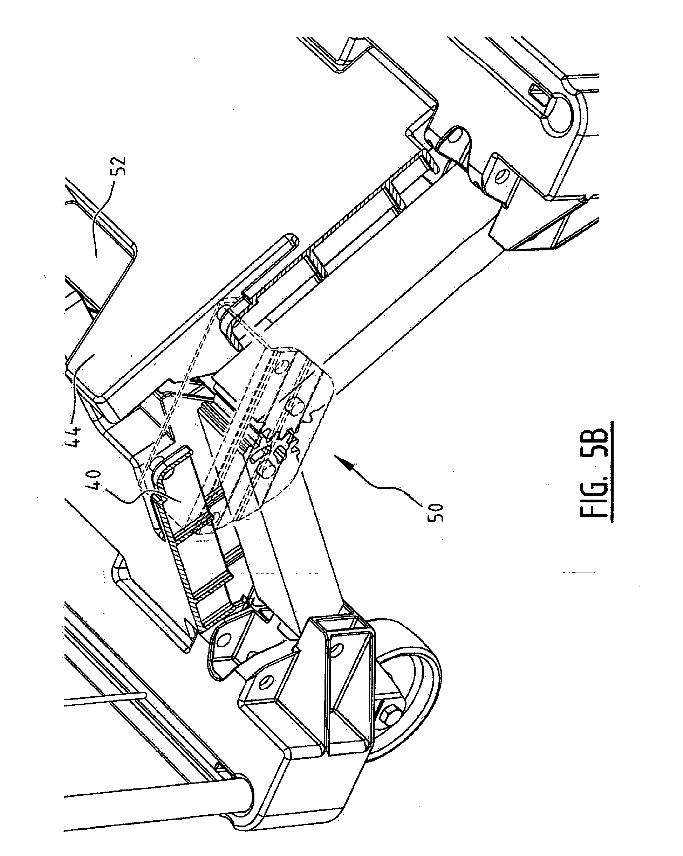

In an alternative embodiment rolling container 36 (figures 5A and B) is provided with a floor part or carrier part 38. Carrier part 38 is formed by two parts 40 which together form the central bridge part 42, two intermediate parts 44 and side parts 46. The operation hereof with contact elements 50 is the same as the operation in the above described embodiment of rolling container 2. A relevant difference is that bridge part 42 in rolling container 36 is formed by two separate parts 40. It is otherwise also possible here to apply more than two parts 40. Contact elements 50 for connecting intermediate parts 44 are here also the same as those of rolling container 2. A number of support surfaces 52 are also provided so as to further improve the force transmission during loading of rolling container 36.

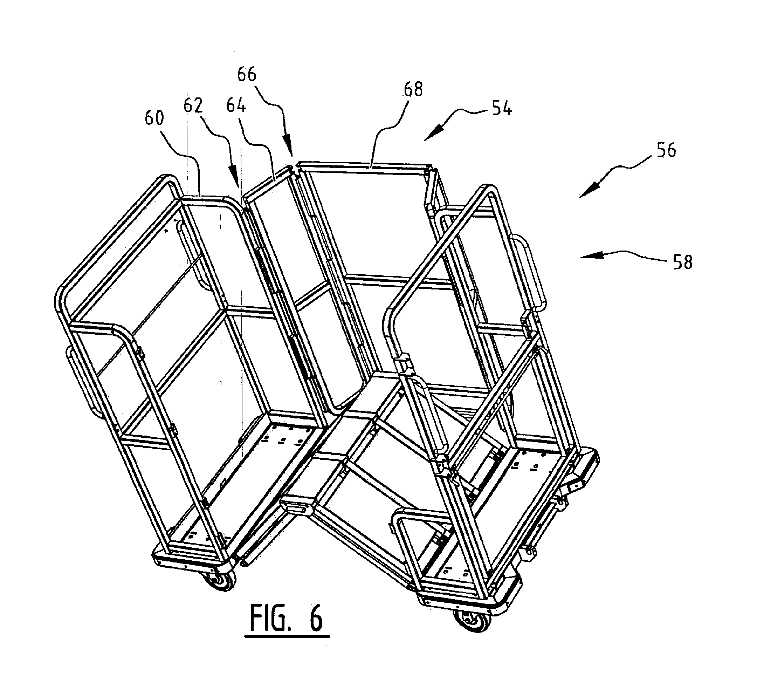

A rear wall 54 (figure 6) can be placed on rolling container 56. In the shown embodiment rear wall 54 is placed between two side walls 58. The two first parts 60 of rear wall 58 are connected to side walls 58. First parts 60 are connected via hinges 62 to second parts 64. These second parts 64 are connected via hinges 66 to middle part 68 of rear wall 54. In the shown embodiment of rolling container 56 the rear wall 54 pivots outward during the folding movement. As shown for rolling container 56, hinges 62 are provided on the outer side and hinges 66 on the inner side of rear wall 54. It has been found that this enables an effective folding movement.

It is noted for the sake of completeness that the different measures for the shown rolling containers 2, 36, 56 can be combined with each other. It is thus expressly possible for instance to apply rear wall 54 in rolling containers 2, 36.

The present invention is by no means limited to the above described embodiments thereof. The rights sought are defined by the following claims, within the scope of which many modifications can be envisaged. It is thus possible for instance to change the shape of for instance intermediate parts 14. In the shown embodiment intermediate part 14 is provided with a kind of stepped side edge for the purpose of the connection to central part 10 and side parts 18. Other forms, and a different dimensioning thereof, are also possible according to the invention.

## Claims

1. Rolling container (2,35,56), comprising:
- a foldable carrier part (4); and
- roller elements (6,8) arranged on the carrier part,
wherein the foldable carrier part is provided with a central bridge part (10), connecting parts (12) connected pivotally on either side to the bridge part, and side parts (18) connected pivotally to the connecting parts such that the carrier part is foldable, wherein during folding the central bridge part moves in a direction substantially at right angles to the plane of the carrier part in a situation of use, wherein the connecting part comprises an intermediate part (14) and a coupling part (16), each pivotally connected to the central bridge part and one of the side parts, wherein the intermediate part and the coupling part are connected with separate pivot shafts (24,26,28,30) to the central bridge part and one of the side parts, and **characterized in that** the pivot shafts of one connecting part are positioned such that a parallelogram construction (32) is realized.

2. Rolling container as claimed in claim 1, wherein in use the parallelogram constructions on either side of the central bridge part are moved through a dead centre.

3. Rolling container as claimed in one or more of the claims 1-2, wherein the coupling part is provided with contact elements (34) which engage on corresponding contact elements (34) of the coupling part located on the other side of the central bridge part.

4. Rolling container as claimed in one or more of the foregoing claims, wherein the connecting parts are provided symmetrically such that the connecting parts on either side of the central bridge part are interchangeable.

5. Rolling container as claimed in one or more of the foregoing claims, wherein the roller elements are provided on side parts of the carrier part.

6. Rolling container as claimed in one or more of the foregoing claims, wherein the side part is provided with coupling means for coupling of a side wall (58).

7. Rolling container as claimed in one or more of the foregoing claims, wherein a rear wall (54) is provided.

8. Rolling container as claimed in claim 7, wherein the rear wall is provided with hinge means (62,66) for folding the rear wall outward in coordinated manner with the foldable carrier part.

9. Method for transporting rolling containers (2,36,56), comprising of folding a rolling container as claimed in one or more of the foregoing claims.

## Patentansprüche

1. Rollbehälter (2, 35, 56), der aufweist:
- ein faltbares Trägerteil (4); und
- Rollenelemente (6, 8), die auf dem Trägerteil angeordnet sind, wobei das faltbare Trägerteil mit einem zentralen Stegteil (10), Verbindungsteilen (12), die auf jeder Seite schwenkbar mit dem Stegteil verbunden sind, und Seitenteilen (18) versehen ist, die schwenkbar mit den Verbindungsteilen verbunden sind, so dass das Trägerteil faltbar ist, wobei das zentrale Stegteil sich während des Faltens in eine Richtung im Wesentlichen in senkrechten Winkeln zu der Ebene des Trägerteils in einer Verwendungssituation bewegt, wobei das Verbindungsteil ein Zwischenteil (14) und ein Kopplungsteil (16) aufweist, von denen jedes schwenkbar mit dem zentralen Stegteil und einem der Seitenteile verbunden ist, wobei das Zwischenteil und das Kopplungsteil mit getrennten Schwenkachsen (24, 26, 28, 30) mit dem zentralen Stegteil und einem der Seitenteile verbunden sind, und
**dadurch gekennzeichnet, dass** die Schwenkwellen eines Verbindungsteils derart positioniert sind, dass eine Parallelogrammkonstruktion (32) realisiert wird.

2. Rollbehälter nach Anspruch 1, wobei in Verwendung die Parallelogrammkonstruktionen auf jeder Seite des zentralen Stegteils durch einen Totpunkt bewegt werden.

3. Rollbehälter nach einem oder mehreren der Ansprüche 1 - 2, wobei das Kopplungsteil mit Kontaktelementen (34) versehen ist, die auf entsprechenden Kontaktelementen (34) des Kopplungsteils eingreifen, die sich auf der anderen Seite des zentralen Stegteils befinden.

4. Rollbehälter nach einem oder mehreren der vorangehenden Ansprüche, wobei die Verbindungsteile symmetrisch bereitgestellt sind, so dass die Verbindungsteile auf jeder Seite des zentralen Stegteils austauschbar sind.

5. Rollbehälter nach einem oder mehreren der vorangehenden Ansprüche, wobei die Rollenelemente auf Seitenteilen des Trägerteils bereitgestellt sind.

6. Rollbehälter nach einem oder mehreren der vorangehenden Ansprüche, wobei das Seitenteil mit Kopplungseinuchtungen zum Koppeln einer Seitenwand (58) versehen ist.

7. Rollbehälter nach einem oder mehreren der vorangehenden Ansprüche, wobei eine Rückwand (54) bereitgestellt ist.

8. Rollbehälter nach Anspruch 7, wobei die Rückwand mit Scharniereiniichtungen (62, 66) versehen ist, um die Rückwand in einer koordinierten Weise mit dem faltbaren Trägerteil nach außen zu falten.

9. Verfahren für den Transport von Rollbehältern (2, 36, 56), welches das Falten eines Rollbehälters nach einem oder mehreren der vorangehenden Ansprüche aufweist.

## Revendications

1. Conteneur roulant (2, 35, 56), comprenant :
une partie de support pouvant être repliée (4) ; et
des éléments formant roulette (6, 8) agencés sur la partie de support, dans lequel la partie de support pouvant être repliée comporte une partie de jonction centrale (10), des parties de liaison (12) reliées à la partie de jonction de manière à pouvoir pivoter de chaque côté, et des parties latérales (18) reliées de manière à pouvoir pivoter aux parties de liaison de telle sorte que la partie de support peut être repliée, dans lequel, au cours du pliage, la partie de jonction centrale se déplace dans une direction sensiblement à angle droit par rapport au plan de la partie de support dans une situation d'utilisation, dans lequel la partie de liaison comprend une partie intermédiaire (14) et une partie de couplage (16), chacune étant reliée de manière à pouvoir pivoter à la partie de jonction centrale et à une des parties latérales, dans lequel la partie intermédiaire et la partie de couplage sont reliées avec des arbres indépendants formant pivot (24, 26, 28, 30) à la partie de jonction centrale et à l'une des parties latérales, et caractéiisé en ce que les arbres formant pivot d'une première partie de liaison sont positionnés de telle sorte qu'une construction en parallélogramme (32) est assurée.

2. Conteneur roulant selon la revendication 1, dans lequel, en utilisation, les constructions en parallélogramme de chaque côté de la partie de jonction centrale sont déplacées par l'intermédiaire d'un axe fixe.

3. Conteneur roulant selon une ou plusieurs des revendications 1 et 2, dans lequel la partie de couplage comporte des éléments de contact (34) qui sont couplés à des éléments de contact correspondants (34) de la partie de couplage située de l'autre côté de la partie de jonction centrale.

4. Conteneur roulant selon une ou plusieurs des revendications précédentes, dans lequel les parties de liaison sont agencées de manière symétrique de telle sorte que les parties de liaison de chaque côté de la partie de jonction centrale sont interchangeables.

5. Conteneur roulant selon une ou plusieurs des revendications précédentes, dans lequel les éléments formant roulette sont agencés sur des parties latérales de la partie de support.

6. Conteneur roulant selon une ou plusieurs des revendications précédentes, dans lequel la partie latérale comporte des moyens de couplage destinés à assurer le couplage d'une paroi latérale (58).

7. Conteneur roulant selon une ou plusieurs des revendications précédentes, dans lequel une paroi arrière (54) est formée.

8. Conteneur roulant selon la revendication 7, dans lequel la paroi arrière comporte des élément formant charnière (62, 66) afin de maintenir la paroi arrière vers l'extérieur de manière coordonnée avec la partie de support pouvant être pliée.

9. Procédé de transport de conteneurs roulants (2, 36, 56), comprenant le pliage d'un conteneur roulant selon une ou plusieurs des revendications précédentes.
